# FASCICULE DE BREVET EUROPEEN

(11) **EP 1 979 217 B1**
(45) Date de publication et mention de la délivrance du brevet: **08.12.2010**
(21) Numéro de dépôt: 07704082.2
(22) Date de dépôt: 23.01.2007
(51) Int. Cl.: B62B 5/00, F16H 29/02

(54) **SYSTEME D'AIDE AU DEMARRAGE DE CHARIOTS TIRES OU POUSSES**
SYSTEM ZUR UNTERSTÜTZUNG BEIM START VON GEZOGENEN ODER GESCHOBENEN WAGEN
SYSTEM FOR ASSISTING WITH STARTING PULLED OR PUSHED CARRIAGES

(30) Priorité: 23.01.2006 FR 0600560
(43) Date de publication de la demande: 15.10.2008
(73) Titulaire: PH. B INNOVATIONS Sarl, 67000 Strasbourg (FR)
(72) Inventeur: BAGGIO, Jean-Marc, F-57360 Amneville (FR)
(74) Mandataire: Office Freylinger
(86) Numéro de dépôt international: PCT/EP2007/050648
(87) Numéro de publication internationale: WO 2007/082958

(56) Documents cités:
- EP-B1- 0 287 483
- WO-A-2004/067350
- US-A- 3 937 479

## Description

### Domaine Technique

La présente invention concerne généralement le domaine des objets roulants, poussés ou tirés. Le document EP 0 287 483 B1 divulgue un mécanisme d'aide au démarrage conformément au préambule de la revendication 1.

### Etat de la technique

Un problème n'ayant que partiellement été résolu est celui des efforts nécessaires à la mise en vitesse, notamment lors de la phase de démarrage ou de redémarrage, phases au cours desquelles les efforts à fournir sont plus élevés qu'en marche continue.

Il manque un système simple dont l'actionnement se fait par la même cinématique de translation de l'organe de manoeuvre qu'en marche normale.

### Description générale de l'invention

Ce but est atteint par un mécanisme d'aide au démarrage et à la progression d'un objet roulant, poussé ou tiré, par action de translation sur son organe de manoeuvre (barre de poussée, timon de traction), caractérisé en ce que ce mécanisme entraîné par la translation dudit organe de manoeuvre actionne en rotation au moins une roue dudit objet roulant, par l'intermédiaire d'un système de roue libre.

Lors de la mise en mouvement d'un objet roulant, il est nécessaire de vaincre l'inertie des parties mobiles et les forces de friction statique. Il peut en plus s'ajouter une augmentation de son énergie potentielle de gravité si son cheminement est en montée. Il est judicieux d'utiliser l'effort appliqué à l'organe de manoeuvre, barre de poussée ou timon de traction, non pas pour mouvoir directement l'objet mais pour faire tourner au moins une roue dudit objet roulant pour l'entraîner à une vitesse moindre que le ferait ledit organe par l'intermédiaire d'un système à tringles, à câbles ou tout autre moyen de transmission mécanique connu en soi capable de transformer une translation en rotation. Les efforts et les déplacements étant inversement proportionnels, il s'ensuit une démultiplication de l'effort à appliquer, avec évidemment un déplacement moindre de l'objet par rapport au déplacement de l'organe de commande. La course de l'organe de manoeuvre étant forcément limitée par conception, on retrouvera cet organe lié à l'objet roulant à la fin du déplacement relatif, mais avec l'avantage d'avoir ledit objet avec une vitesse de déplacement non nulle et un besoin moindre d'effort pour continuer le mouvement car les forces de friction sont maintenant dans le domaine dynamique, donc plus faibles, et les variations d'énergie cinétique sont également inférieures. On retrouve alors la configuration normale de l'organe commandant l'objet d'où la nécessité de prévoir un mécanisme de roue libre, ou de débrayage, pour que ladite roue puisse continuer à tourner librement.

La présente invention exploite donc l'effort appliqué par l'utilisateur sur l'organe de manoeuvre pour entraîner l'objet roulant, par ex. un chariot, de manière indirecte à travers le mécanisme selon l'invention pendant une phase de démarrage, ce qui requiert un organe de manoeuvre capable d'un mouvement relatif par rapport au chariot pendant cette phase de démarrage. L'organe de manoeuvre peut par exemple comprendre une barre de poussée montée de sorte à pouvoir être translatée entre une position initiale (avant démarrage) et finale, dans laquelle elle est immobile par rapport au chariot et la force appliquée sur la barre de poussée est transmise directement au chariot et permet le déplacement de manière conventionnelle. La distance entre les positions initiale et finale définit la course de la barre de poussée, qui peut être par exemple de l'ordre de 20 à 30 cm.

### Description des dessus

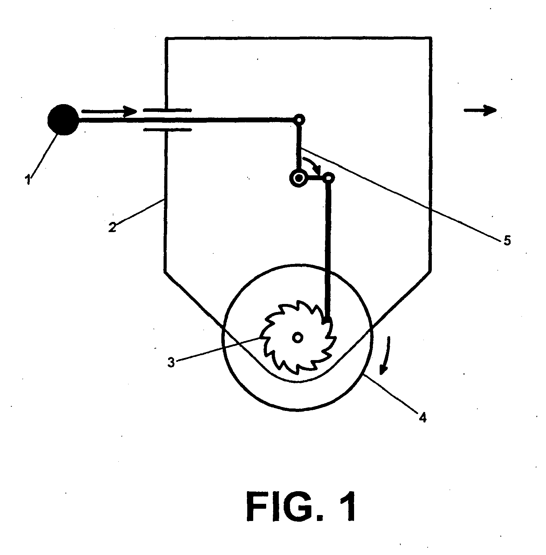

D'autres particularités et caractéristiques de l'invention ressortiront de la description détaillée de quelques modes de réalisation avantageux présentés ci-dessous, à titre d'illustration, en se référant au dessin annexé. Celui-ci montre en FIG.1 un schéma de principe d'une variante d'un mécanisme selon l'invention.

### Description détaillée de quelques modes de réalisation préférés

L'invention sera mieux comprise à la lumière de la description détaillée qui va suivre, en référence au dessin annexé dans lequel la figure unique représente une forme particulière de réalisation de l'invention. Un objet roulant poussé 2 est mis en mouvement par un organe de manoeuvre, ici une barre de poussée 1. Au départ du mouvement, cette barre de poussée n'entraîne pas directement l'objet, mais fait tourner sa roue 4 par l'intermédiaire d'une tringlerie 5 et d'une roué à rochets 3. L'objet commence alors à se déplacer, idéalement moins vite que la barre de poussée qui, par conception, arrive finalement en butée et entraîne alors directement l'objet à sa propre vitesse, la roue et sa roue à rochets, tournant alors librement. Un système de rappel non représenté permet de repositionner le mécanisme lors d'un nouveau démarrage.

Dans une forme particulière de réalisation de l'invention, la mise en rotation de la dite au moins une roue est progressive. La démultiplication entre les déplacements de l'organe de manoeuvre et de l'objet roulant n'est pas constante mais décroissante pour avoir la meilleure utilisation de l'effort appliqué audit organe. Il est judicieux de démarrer l'objet roulant avec une démultiplication importante qui peut ensuite décroître au fur et à mesure que l'objet roulant accélère. Cela peut être réalisé avec des systèmes mécaniques existant comme des systèmes à tringles ou à câbles, à engrenages en spirale comme décrit dans les brevets français 0309582 et 0406393, à poulies en spirale comme décrit dans la demande de brevet français 0508771 non encore publiée, ou par tout autre système de variateur connu en soi.

Dans une forme particulière de réalisation de l'invention, la vitesse de déplacement de l'objet roulant atteint la vitesse de translation de l'organe de manoeuvre, ce qui permet un mouvement continu à la fin de la phase transitoire de mise en vitesse de l'objet roulant. Cette égalité des vitesses est obtenue par un calcul judicieux de la démultiplication du mécanisme et peut idéalement être concrétisée par la butée de l'organe de manoeuvre avec une partie fixe de l'objet roulant, redonnant à l'organe de manoeuvre une fonctionnalité identique à celle d'un objet roulant conventionnel. On remarquera que la continuité entre fin de phase transitoire et régime permanent est dans l'esprit des brevets suscités.

Dans une forme particulière de réalisation de l'invention, l'organe de manoeuvre peut être bloqué et débloqué à la demande. Les dispositifs de blocage et déblocage peuvent être réalisés par des systèmes de loquets, à goupilles, à vis, ou tout autre système connu en soi et peuvent être manoeuvrés à la demande pour retourner à un objet roulant conventionnel. Cette manoeuvre de blocage peut être également automatique, en particulier à la fin d'une phase transitoire de mise en vitesse avant un régime permanent. De même, le déblocage peut être également automatique à chaque redémarrage ou à chaque cessation d'effort sur l'organe de manoeuvre. Ce verrouillage permet également la fonction de freinage lorsque celle-ci est assurée par ledit organe de manoeuvre.

Dans une forme particulière de réalisation de l'invention, le mécanisme et son système de roue libre doivent permettre le déplacement en marche arrière de l'objet roulant. Il est en effet souhaitable que l'objet roulant puisse se déplacer dans les deux sens de marche sans perturbation par le dispositif d'aide au démarrage. Dans le sens normal de marche, cela est réalisé grâce au système de roue libre précité. Pour un éventuel fonctionnement en marche arrière, il est judicieux d'y adjoindre un débrayage du mécanisme entre l'organe de manoeuvre et la dite au moins une roue entraînée pour permettre à celle-ci de tourner en sens contraire. Cela peut-être réalisé par tout système connu en soi de désolidarisation mécanique commandé soit par la rotation d'une roue, soit par l'action idoine sur l'organe de manoeuvre, soit même par une commande externe.

Dans une forme particulière de réalisation, le mécanisme permet de débloquer un frein de parcage. Dans le cas d'objets roulants équipés de frein de parcage qui ont pour but de les sécuriser, sur sol non horizontal par exemple, il est nécessaire de desserrer ces dits freins avant mise en mouvement. Il est avantageux d'utiliser le mécanisme d'aide de démarrage pour assurer cette opération car ce dernier est en opération justement pendant cette phase de démarrage. Il est donc judicieux de coupler ce dispositif de desserrage avec le début de fonctionnement du mécanisme d'aide au démarrage par tout système connu en soi.

Il est bien entendu que d'autres modes de réalisation sont possibles sans sortir du cadre de la protection de la présente invention.

## Revendications

1. Mécanisme d'aide au démarrage et à la progression d'un objet roulant (2), poussé ou tiré, par action de translation sur son organe de manoeuvre (1), en particulier une barre de poussée ou un timon de traction), **caractérisé en ce que** ce mécanisme entraîné par la translation dudit organe de manoeuvre (1) actionne en rotation au moins une roue (4) dudit objet routant (2), par l'intermédiaire d'un système de roue libre (3).

2. Mécanisme selon revendication 1 **caractérisé en ce que** la mise en rotation de la dite au moins une roue (4) est progressive.

3. Mécanisme selon revendications 1 et 2 **caractérisé en ce que** la vitesse de déplacement de l'objet roulant (2) atteint la vitesse de translation de l'organe de manoeuvre (1).

4. Mécanisme selon l'une quelconque des revendications précédentes, **caractérisé en ce que** l'organe de manoeuvre (1) peut être bloqué et débloqué à la demande.

5. Mécanisme selon l'une quelconque des revendications précédentes, **caractérisé en ce que** le mécanisme et son système de roue libre (3) peuvent permettre le déplacement en marche arrière de l'objet roulant (2).

6. Mécanisme selon l'une quelconque des revendications précédentes, **caractérisé en ce que** ce mécanisme permet de débloquer un frein de parcage.

## Claims

1. A mechanism for assisting in starting and advancing a pushed or pulled rolling object (2) by translational action of the operating member (1) thereof, in particular a push bar or a drawbar, **characterized in that** said mechanism, driven by translation of said operating member (1), sets at least one wheel (4) of said rolling object (2) in rotational motion by means of a free-wheel system (3).

2. The mechanism according to claim 1, **characterized in that** said at least one wheel (4) is set in rotation progressively.

3. The mechanism according to claims 1 and 2, **characterized in that** the speed of displacement of the rolling object (2) reaches the speed of translation of the operating member (1).

4. The mechanism according to any one of the preceding claims, **characterized in that** the operating member (1) may be locked and unlocked as required.

5. The mechanism according to any one of the preceding claims, **characterized in that** the mechanism and its free-wheel system (3) may allow backwards motion of the rolling object (2).

6. The mechanism according to any one of the preceding claims, **characterized in that** said mechanism makes it possible to release a parking brake.

## Patentansprüche

1. Mechanismus zur Anfahr- und Fortbewegungshilfe eines rollenden (2), geschobenen oder gezogenen Objektes durch Translationswirkung auf sein Betätigungsorgan (1), insbesondere eine Schubstange oder eine Zugdeichsel, **dadurch gekennzeichnet, dass** der durch die Translation des Betätigungsorgans (1) angetriebene Mechanismus mindestens ein Rad (4) des rollenden Objektes (2) über ein Freilaufsystem (3) in Drehbewegung versetzt.

2. Mechanismus nach Anspruch 1, **dadurch gekennzeichnet, dass** die Drehbewegung des mindestens einen Rades (4) progressiv ist.

3. Mechanismus nach Ansprüchen 1 und 2, **dadurch gekennzeichnet, dass** die Verfahrgeschwindigkeit des rollenden Objektes (2) die Translationsgeschwindigkeit des Betätigungsorgans (1) erreicht.

4. Mechanismus nach irgendeinem der vorhergehenden Ansprüche, **dadurch gekennzeichnet, dass** das Betätigungsorgan (1) nach Bedarf blockiert und gelöst werden kann.

5. Mechanismus nach irgendeinem der vorhergehenden Ansprüche, **dadurch gekennzeichnet, dass** der Mechanismus und sein Freilaufsystem (3) das Verfahren des rollenden Objektes (2) im Rückwärtsgang gestatten können.

6. Mechanismus nach irgendeinem der vorhergehenden Ansprüche, **dadurch gekennzeichnet, dass** der Mechanismus das Lösen einer Parkbremse gestattet.
